# EUROPEAN PATENT APPLICATION

(11) **EP 3 878 814 A1**
(43) Date of publication of application: **15.09.2021**
(21) Application number: 19882477.3
(22) Date of filing: 11.10.2019
(51) Int. Cl.: C01D 15/02, C01G 53/00, H01M 4/525, H01M 10/0525

(54) **LITHIUM COMPOUND, NICKEL-BASED CATHODE ACTIVE MATERIAL, METHOD FOR PREPARING LITHIUM OXIDE, METHOD FOR PREPARING NICKEL-BASED CATHODE ACTIVE MATERIAL, AND SECONDARY BATTERY USING SAME**

(30) Priority: 06.11.2018 KR 20180134866
(71) Applicant: POSCO, Pohang-si, Gyeongsangbuk-do 37859 (KR); Research Institute of Industrial Science & Technology, Pohang-si, Gyeongsangbuk-do 37673 (KR)
(72) Inventor: LEE, Jae Myung, Pohang-si Gyeongsangbuk-do 37673 (KR); AHN, Jun-Kyu, Pohang-si Gyeongsangbuk-do 37712 (KR); KIM, Sang Won, Pohang-si Gyeongsangbuk-do 37655 (KR); YANG, Heok, Pohang-si Gyeongsangbuk-do 37655 (KR)
(74) Representative: Potter Clarkson
(86) International application number: PCT/KR2019/013381
(87) International publication number: WO 2020/096212

(57) **Abstract**

The present invention relates to a lithium compound, a nickel-based cathode active material, a method for preparing lithium oxide, a method for preparing a nickel-based cathode active material, and a secondary battery using same. The lithium compound includes primary particles of Li₂O having an average particle diameter (D50) of less than or equal to 5 µm; and secondary particles composed of the primary particles.

## Description

### [Technical Field]

A lithium compound, a nickel-based cathode active material, a method for preparing lithium oxide, a method for preparing a nickel-based cathode active material, and a secondary battery using the same are disclosed.

### [Background Art]

Lithium secondary batteries have a high energy density, which is 1.5 to 2 times higher than that of Ni/Cd batteries, when compared at the same volume and thus are widely used as a power source for mobile phones, laptops, electric vehicles, and the like. Since the lithium secondary batteries as a main component determine performance of the portable products, a need for high performance batteries is emerged. Battery performance is required as high efficiency characteristics, stability at high temperatures, cycle-life, charge/discharge characteristics, etc.

In particular, as cells are coupled in parallel, over-discharge in the lithium secondary batteries may be magnified as an important factor.

Currently, lithium secondary batteries based on a lithium metal oxide as a cathode and carbon as an anode are used in most markets. In general, cycle-life efficiency of a cathode material based on the lithium metal oxide is higher than that of an anode material based on the carbon.

In such an environment, the more frequent over-discharges, the more side reactions occur at the anode, resulting in a short circuit of the cells coupled in parallel. In order to solve this problem, a method of increasing the efficiency of the anode or matching the efficiency of the cathode to that of the anode may be adopted, but there are many obstacles to increasing the efficiency of the anode. Accordingly, a lithium nickel oxide (Li₂NiO₂) with a rhombic lmmm structure as a representative cathode additive for matching the efficiency of the cathode to that of the anode is being researched.

However, there is a drawback that lithium oxide, a precursor of the lithium nickel oxide, is expensive. In order to solve this problem, another lithium nickel oxide-manufacturing process of using lithium hydroxide, lithium carbonate, lithium nitrate, etc. as the precursor has been researched but faces difficulties in production according to processibility deterioration due to a reaction with a crucible used during the sintering at a high temperature and the manufacturing.

Specifically, over-lithiated transition metal oxide is synthesized in a method of mixing transition metal oxide of MOx (NiO, CoO, FeO, MnO, etc.) as a raw material with lithium oxide (Li₂O) of a reaction equivalent or more and heat-treating the mixture.

When the transition metal oxide and the lithium oxide (Li₂O) mixed to synthesize the over-lithiated transition metal oxide are not completely reacted, there may be problems of reducing irreversible capacity, reversible capacity, and reversible efficiency and shortening a cathode battery cycle-life in the electrochemical reaction of the over-lithiated transition metal oxide.

In addition, during the battery manufacturing process, there also may be problems such as slurry clogging and electrode coating defects due to solidification of the liquid electrode slurry.

After manufacturing a battery, there still may be problems of gas generation due to decomposition of an electrolyte solution, battery cycle-life decrease and explosion due to the battery swelling, high temperature stability deterioration, and the like.

There is no method of easily detecting the over-lithiated transition metal oxide synthesized by an incomplete reaction, but even when re-sintered, there is a problem of still not securing a complete reaction, and the lithium oxide (Li₂O) may be more added thereto but supply an excessive amount of lithium, exacerbating the problems listed above.

### [Disclosure]

Accordingly, since the particle size and shape of the over-lithiated transition metal oxide are determined by properties of the transition metal oxide, changing the properties of the transition metal oxide is limited.

Accordingly, in order to improve an incomplete reaction of the over-lithiated transition metal oxide, there are needs for improving a reactivity and miscibility of lithium oxide (Li₂O) with the transition metal oxide.

In an embodiment of the present invention, in order to improve the degree of mixing with the transition metal oxide, the shape of the lithium oxide may be adjusted to a spherical shape.

In order to facilitate adsorption on the surface of the transition metal oxide during the mixing process, lithium oxide is composed of small primary particles of less than or equal to 5 µm. Lithium oxide composed of fine particles has a large specific surface area, resulting in high reactivity. More specifically, it may be composed of particles of less than or equal to 1 µm.

Fine primary particles are easily floated, resulting in poor process workability, large material loss, and aggregation of lithium oxide powders due to electrostatic force, resulting in low miscibility. Therefore, it is desirable that the fine primary particles are aggregated to constitute secondary particles having a size similar to that of the transition metal oxide.

Lithium oxide in the form of secondary particles may be pulverized during mixing with the transition metal oxide to be uniformly distributed on the surface of the transition metal oxide.

Impurities contained in lithium oxide may cause eutectic reaction with lithium oxide, lowering the dissolution temperature of lithium oxide, and ultimately increasing the reactivity of lithium oxide, and thus, there may be some positive effects within the permitted range.

This improved lithium oxide will be described in detail below.

An embodiment of the present invention provides a lithium compound including Li₂O primary particles having an average particle diameter (D50) of less than or equal to 5 µm; and secondary particles composed of the primary particles. The lithium compound may be lithium oxide. Descriptions for the purposes and effects of the primary particles and secondary particles are the same as described above.

The secondary particles may have a spherical shape. Lithium oxide currently commercially available does not have a spherical shape and may have a particle composition of various shapes. It is possible to achieve improved reactivity with the transition metal oxide from a uniform spherical shape.

More specifically, the average particle diameter (D50) of the secondary particles may be 10 to 100 µm. Alternatively, the average particle diameter (D50) of the secondary particles may be 10 to 30 µm. This may be adjusted according to the size of the selected transition metal oxide.

Another embodiment of the present invention provides a nickel-based cathode active material derived from a lithium compound including primary Li₂O particles having an average particle diameter (D50) of less than or equal to 5 µm and secondary particles composed of the primary particles; and a nickel raw material.

The cathode active material may be Li₂NiO₂, and Dmin may be greater than or equal to 5 µm.

The cathode active material may include a residual lithium compound of less than or equal to 2.5 wt% based on 100 wt% of the total weight. This is caused by the characteristics of the lithium raw material as described above. Due to the improved reactivity of lithium oxide in the form of secondary particles, residual lithium characteristics may be improved.

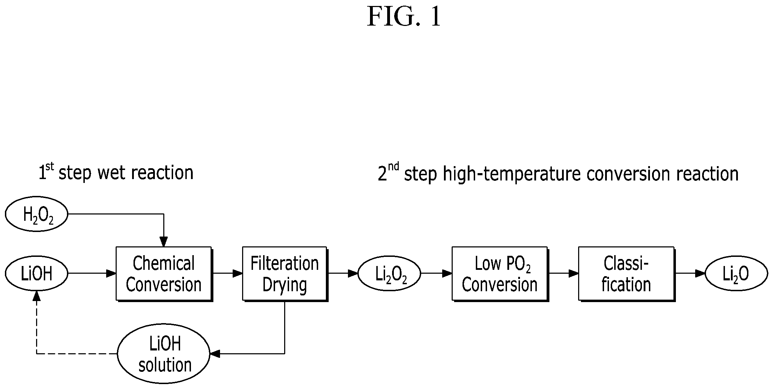

FIG. 1 is a schematic flowchart of a method for preparing lithium oxide according to an embodiment of the present invention.

Specifically, it may be prepared in two steps of a wet reaction of lithium hydroxide raw materials and a high-temperature decomposition reaction in a low-oxygen atmosphere.

### 1^{st} step: 2LiOH-xH₂O + H₂O₂ -> Li₂O₂ + yH₂O, x is an integer of 0 or more.

### 2^{nd} step: Li₂O₂ -> Li₂O + 1/2O₂ (g)

The schematic synthesis method of each step is as follows. In each process, it is desirable to maintain an inert atmosphere in order to prevent contamination by moisture and CO₂ in the atmosphere and promote material conversion.

### Mixing step of a lithium raw material including lithium hydroxide monohydrate or lithium hydroxide and hydrogen peroxide solution

A theoretical reaction ratio between lithium hydroxide and hydrogen peroxide solution may be 2:1, but the ratio may be adjusted to improve the reaction yield. This will be described later.

As the raw material, lithium hydroxide monohydrate (LiOH-H₂O), lithium hydroxide anhydride (LiOH), or lithium hydroxide polyhydride (LiOH-xH₂O) may be used. In order to improve the reaction yield, it is desirable to use lithium hydroxide anhydride.

The hydrogen peroxide may be used as an aqueous solution (H₂O₂-zH₂O, z is an integer of 0 or more). In order to improve the reaction yield, it is recommended to use pure hydrogen peroxide, but it is desirable to use an aqueous solution having a concentration of 35% for storage and safety reasons.

### Adjustment step of precipitation and shape of over-lithiated oxide

The particle size and shape of the Li₂O₂ intermediate material generated by controlling the shape of the reactor, the shape and dimension of the internal baffle and the impeller, the number of rotations of the impeller, the reactor temperature, etc. may be controlled. As the number of rotations of the impeller increases, the average sizes of the particles decrease, and spherical particles are formed.

As the reactor temperature is higher, the average size of the particles may be larger and the shape may be changed from spherical to amorphous.

The reaction time may be 1 minute or more after the raw materials is added, and about 30 to 60 minutes may be suitable.

Although it is not necessary to adjust the temperature of the reactor, it is desirable to adjust it within the range of 30 to 60 °C in order to control the reaction rate.

### Recovery and drying of the prepared slurry precipitate

The solution and solids may be separated by sedimenting the prepared slurry, passing through a filter, or centrifugation. The recovered solution may be a lithium hydroxide aqueous solution in which an excess of lithium is dissolved, and may be used to prepare a lithium compound. The recovered Li₂O₂ solids may be dried on the surface of adsorbed water through vacuum drying.

### Heat treatment in a low-oxygen atmosphere

The recovered solids are converted into Li₂O₂ at high temperature in an inert or vacuum atmosphere. The conversion temperature may be at 300 °C or higher, and desirably 400 °C to 600 °C.

### Li₂O powder recovery and packaging

Nitrogen filling and vacuum packaging are desirable to prevent deterioration in the atmosphere.

In particular, there is a risk of being deteriorated into lithium hydroxide and lithium carbonate when it comes into contact with moisture in the atmosphere and CO₂ at the same time.

Hereinafter, a preparing method according to an embodiment of the present invention is described in detail.

Another embodiment of the present invention provides a method for preparing lithium oxide that includes reacting hydrogen peroxide (H₂O₂) and lithium hydroxide (LiOH) to obtain over-lithiated oxide (Li₂O₂); and heat-treating the over-lithiated oxide to obtain lithium oxide (Li₂O); wherein in the reacting of the hydrogen peroxide (H₂O₂) and lithium hydroxide (LiOH) to obtain a over-lithiated oxide (Li₂O₂), a mole ratio (Li/H₂O₂) of lithium of lithium hydroxide to hydrogen peroxide is 1.9 to 2.4.

In the reacting of hydrogen peroxide (H₂O₂) and lithium hydroxide (LiOH) to obtain over-lithiated oxide (Li₂O₂); the reaction temperature may be 40 to 60 °C.

In the reacting of hydrogen peroxide (H₂O₂) and lithium hydroxide (LiOH) to obtain over-lithiated oxide (Li₂O₂); the reaction of hydrogen peroxide (H₂O₂) and lithium hydroxide (LiOH) may be accompanied by stirring at 500 rpm or more.

The heat-treating of the over-lithiated oxide to obtain lithium oxide (Li₂O) may be performed at 400 to 600 °C in an inert atmosphere.

For conditions such as the mole ratio, reaction temperature, and stirring, the meanings of the ranges will be described in detail in examples and experimental examples described later.

Another embodiment of the present invention provides a method for preparing a nickel-based cathode active material includes reacting hydrogen peroxide (H₂O₂) and lithium hydroxide (LiOH) to obtain over-lithiated oxide (Li₂O₂); heat-treating the over-lithiated oxide to obtain lithium oxide (Li₂O); and firing the lithium oxide and nickel raw material to obtain a nickel-based cathode active material, wherein in the reacting of the hydrogen peroxide (H₂O₂) and lithium hydroxide (LiOH) to obtain a over-lithiated oxide (Li₂O₂), a mole ratio (Li/H₂O₂) of lithium of lithium hydroxide to hydrogen peroxide is 1.9 to 2.4.

Another embodiment of the present invention provides a secondary battery that includes a cathode including a nickel-based cathode active material derived from a lithium compound including primary Li₂O particles having an average particle diameter (D50) of less than or equal to 5 µm and secondary particles composed of the primary particles; and a nickel raw material; an anode including a anode active material; and an electrolyte between the cathode and the anode.

A conversion rate may increase during the synthesis of nickel-based lithium oxide compared with the conventional Li₂O, which can lead to an increase in electrochemical capacity, a decrease in the residual lithium content, and an increase in material efficiency.

### [Description of the Drawings]

FIG. 1 is a schematic flowchart of a method for preparing lithium oxide according to an embodiment of the present invention.
FIG. 2 is a SEM photograph of the particle shape according to the result of Experiment 2.
FIG. 3 is a SEM photograph of particle according to Experiment 3.
FIG. 4 is a schematic view of a co-precipitation reactor used in an embodiment of the present invention.
FIG. 5 is an SEM photograph of the particles according to Experiment 4.
FIG. 6 is a schematic view of a furnace designed for Li₂O preparation.
FIG. 7 is a SEM photograph after mixing the raw materials in Experiment 6, and FIG. 8 is a SEM photograph of LNO synthesized after sintering.
FIG. 9 is a charge/discharge curve of the coin cell manufactured in Experiment 6.
FIG. 10 is a SEM photograph of commercially available Li₂O (left) and a SEM photograph of Li₂O according to the present example.

### [Mode for Invention]

Hereinafter, embodiments of the present invention are described in detail. However, these embodiments are exemplary, the present invention is not limited thereto and the present invention is defined by the scope of claims.

### 1. Li/H₂O₂ Ratio, Temperature Experiment

### Experiment Method

After introducing LH powder and H₂O₂, a stirring reaction was started, wherein the reaction time was 60 minutes.

The resultant was filtered with a vacuum-filtering device to recover the Li₂O₂ powder. The recovered powder was dried in a 130 °C vacuum oven for 3 hours. The powder was quantitatively analyzed in a Rietveld refinement method after the XRD measurement. (HighScore Plus Program made by Malvern Panalytical Ltd. was used)

Li₂O₂ acquisition yield = (Li₂O₂ acquisition amount)/(Li₂O₂ acquisition amount when the injected Li raw material is 100% converted), wherein a temperature is a predetermined temperature, and a measured temperature may be 2 to 3 °C lower than that.

Table 1 shows results with respect to purity of the synthesized Li₂O₂ powders.

**(Table 1)**

| **Li/H₂O₂** | **LiOH-H₂O** | **H₂O₂ (34.5%)** | **Li₂O₂ purity [wt%]** | | | | | |
|---|---|---|---|---|---|---|---|---|
| **[mol/mol]** | **[g]** | **[g]** | **Temperature (°C)** | | | | | |
| | | | 25 | 40 | 50 | 60 | 70 | 80 |
| 1.4 | 70 | 117 | 65.3 | **98.6** | **98.4** | 93.3 | 90.5 | **98.3** |
| 1.6 | 80 | 117 | 61.5 | **99** | **97** | **95.6** | 91.7 | **98.7** |
| 1.7 | 85 | 117 | 68.2 | **96.8** | **97.4** | **97.7** | **95.1** | **97** |
| 1.8 | 90 | 117 | 78.7 | **96.4** | **95.9** | **98** | 91.9 | **97.2** |
| 1.9 | 95 | 117 | 90.8 | **98.4** | **96.3** | **98.3** | 93.2 | **96.9** |
| 2.2 | 110 | 117 | **97.4** | **97.4** | **96.1** | **97.2** | 89.1 | 90.9 |
| 2.4 | 120 | 117 | **97.1** | **96.4** | **95.4** | **96.5** | 84.3 | 94.7 |
| 2.6 | 130 | 117 | **97.3** | 94.3 | 94.4 | **95.1** | 89.2 | 93.4 |
| 2.8 | 140 | 117 | 59.1 | 84.6 | 80.2 | 94.4 | 83.5 | 77.7 |
| 3.0 | 150 | 117 | 72.2 | 61.6 | 61.2 | 87.9 | 67.3 | 65.9 |

| | | | | | | | | |
|---|---|---|---|---|---|---|---|---|
| Table 2 shows weights of the synthesized dry powders. The weights of | | | | | | | | |

the synthesized dry powders need to be compared with Li₂O₂ acquisition amounts when theoretically 100% converted. Since the obtained powders are not 100% Li₂O₂, simply a heavy weight is not good.

**(Table 2)**

| **Li/H₂O₂** | **LiOH -H₂O** | **H₂O₂ (34.5%)** | **Weight of Synthesized Li₂O₂ [g], dry powder** | | | | | | **Theoreti cal Li₂O₂ amount** |
|---|---|---|---|---|---|---|---|---|---|
| **[mol/mol]** | **[g]** | **[g]** | **Temperature (°C)** | | | | | | **[g]** |
| | | | 25 | 40 | 50 | 60 | 70 | 80 | |
| 1.4 | 70 | 117 | 30.816 | 25.43 | 27.6 | 25.66 | 27.84 | 24.71 | 38.3 |
| 1.6 | 80 | 117 | 29.896 | 29.62 | 31.53 | 29.63 | 31.4 | 29.3 | 43.7 |
| 1.7 | 85 | 117 | 33.776 | 31.49 | 34.14 | 31.24 | 34.44 | 34.9 | 46.5 |
| 1.8 | 90 | 117 | 35.597 | 33.77 | 35.53 | 34.84 | 38.09 | 36.39 | 49.2 |
| 1.9 | 95 | 117 | 33.804 | 34.56 | 38.69 | 37.59 | 40.47 | 38.43 | 51.9 |
| 2.2 | 110 | 117 | 40.18 | 43.44 | 46.44 | 45.25 | 47.98 | 46.99 | 60.1 |
| 2.4 | 120 | 117 | 44.42 | 47.28 | 48.98 | 48.77 | 50.73 | 50.34 | 65.6 |
| 2.6 | 130 | 117 | 45.53 | 50.16 | 52.7 | 51.73 | 53.31 | 50.99 | 71.1 |
| 2.8 | 140 | 117 | 61.53 | 53.22 | 54.83 | 53.15 | 55.61 | 59.46 | 76.5 |
| 3.0 | 150 | 117 | 57.88 | 56.73 | 61.4 | 60.19 | 59.22 | 57.32 | 82.0 |

The results of Tables 1 and 2 may be used to calculate the Li₂O₂ acquisition yields, and the results are shown in Table 3. Specifically, the results of Table 3 were obtained by multiplying the results of Table 1 with the results of Table 2 and dividing the products by theoretical Li₂O₂ amounts.

**(Table 3)**

| **Li/H₂O₂** | **LiOH-H₂O** | **H₂O₂ (34.5%)** | **Li₂O₂ acquisition yield [%]** | | | | | |
|---|---|---|---|---|---|---|---|---|
| **[mol/mo l]** | **[g]** | **[g]** | **Temperature (°C)** | | | | | |
| | | | 25 | 40 | 50 | 60 | 70 | 80 |
| 1.4 | 70 | 117 | 52.6 | 65.5 | **71.0** | 62.6 | 65.8 | 63.5 |
| 1.6 | 80 | 117 | 42.0 | 67.1 | 69.9 | 64.8 | 65.8 | 66.1 |
| 1.7 | 85 | 117 | 49.6 | 65.6 | **71.6** | 65.7 | **70.5** | **72.9** |
| 1.8 | 90 | 117 | 56.9 | 66.2 | 69.3 | 69.4 | **71.1** | **71.9** |
| 1.9 | 95 | 117 | 59.1 | 65.5 | **71.7** | **71.1** | **72.6** | **71.7** |
| 2.2 | 110 | 117 | 65.1 | **70.4** | **74.2** | **73.1** | **71.1** | **71.0** |
| 2.4 | 120 | 117 | 65.7 | 69.5 | **71.2** | **71.7** | 65.2 | **72.7** |
| 2.6 | 130 | 117 | 62.3 | 66.6 | **70.0** | 69.2 | 66.9 | 67.0 |
| 2.8 | 140 | 117 | 47.5 | 58.8 | 57.5 | 65.6 | 60.7 | 60.4 |
| 3.0 | 150 | 117 | 51.0 | 42.6 | 45.8 | 64.5 | 48.6 | 46.1 |

At a low temperature, since LH was precipitated and not converted into Li₂O₂, Li₂O₂ purity was decreased. At a high temperature, H₂O₂ was decomposed, decreasing the Li₂O₂ purity.

When a Li/H₂O₂ ratio was low, a Li₂O₂ production yield was expected to decrease due to its high dissolution loss in H₂O₂. When the Li/H₂O₂ ratio was high, LH was precipitated, decreasing the Li₂O₂ purity.

An optimal ratio obtained therefrom is shown in Table 4.

**(Table 4)**

| **Parameter** | **Temperature range** | **Li/H₂O₂ mole ratio** |
|---|---|---|
| Optimal synthesis range | 40 °C to 60 °C | 1.9 to 2.4 |

### 2. Reaction Time Experiment

Li₂O₂ was precipitated at 60 °C by controlling reaction time within various ranges as shown in Table 5 below. A specific method was the same as in Experiment 1.

**(Table 5)**

| **Reaction time** | **XRD analysis (wt%)** | **Particle size observation** |
|---|---|---|
| | **Li₂O₂** | **D50 [um]** |
| 10 min. | 98.6 | 90 |
| 30 min. | 97.5 | 90 |
| 60 min. | 98.3 | 100 |
| 90 min. | 99.1 | 90 |
| "+ 60 min. waiting" | 97.7 | 105 |

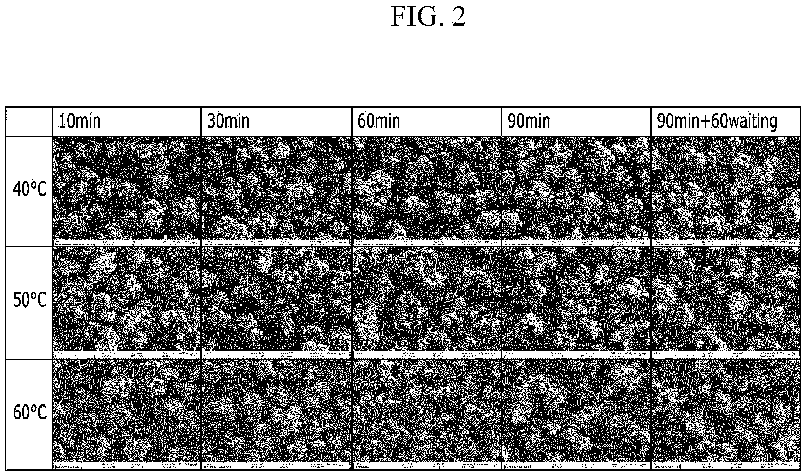

FIG. 2 is a SEM photograph showing a particle shape according to the result of Experiment 2.

At the 60 °C, a reaction was completed within a short time of 10 minutes. After waiting for 60 minutes, the purity decreased. As the waiting time increased, the Li₂O₂ purity decreased. The reason is that LiOH increased according to decomposition of hydrogen peroxide. There was almost no difference in particle size and shape.

Table 6 shows the results of Experiment 2.

**(Table 6)**

| **Parameter** | **Reaction time** | **Temperature** |
|---|---|---|
| Optimal synthesis range | 10 minutes to 90 minutes | Irrelevant |

### 3. Reactor rpm Influence Experiment

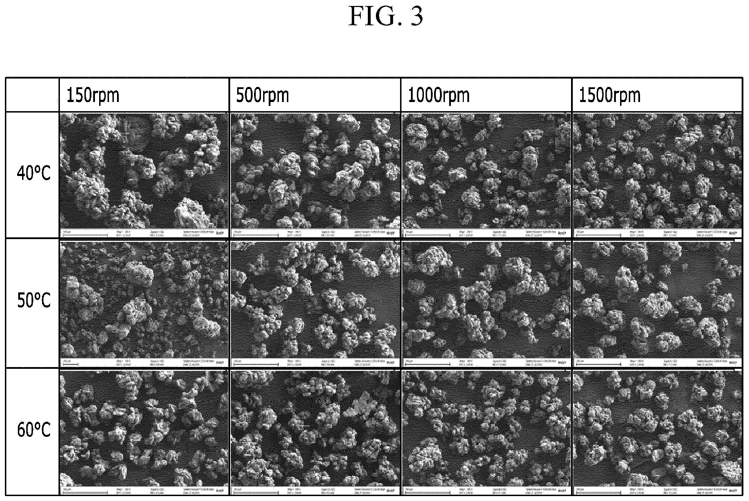

A shape change according to rpm of a reactor was examined. Li₂O₂ with purity of 98% or higher was synthesized regardless of rpm. FIG. 3 is a SEM photograph showing particles of Experiment 3.

There was no shape change at greater than or equal to 500 rpm. The particles had a nonuniform size at 150 rpm.

When rpm was controlled to be greater than or equal to 500, desired effects were expected to be obtained.

### 4. Synthesis Experiment Using Co-precipitation Reactor

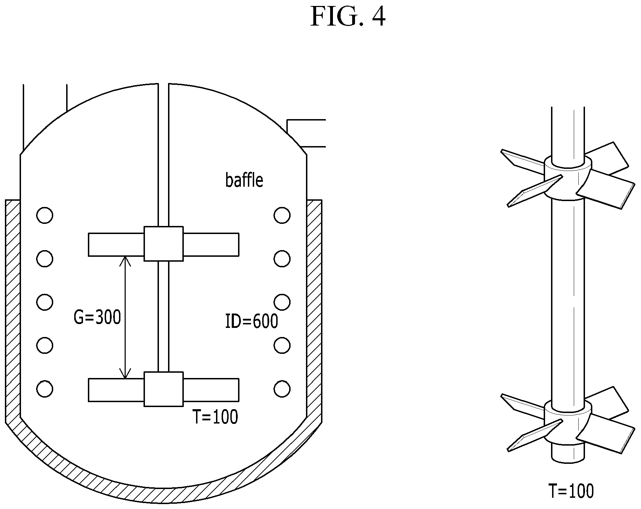

FIG. 4 is a schematic view of a co-precipitation reactor used in an embodiment of the present invention.

Specifically, a co-precipitation reactor used for synthesizing a secondary battery cathode precursor was used to synthesize Li₂O₂. The reactor and an impeller had shapes shown in FIG. 4.

In order to shorten the reaction time, a method of injecting the hydrogen peroxide solution was changed.

A quantitative injection was basically used, but in order to shorten the reaction time, the hydrogen peroxide solution was added manually and then added with a quantitative pump, followed by reacting them.

The results are shown in Table 7.

**(Table 7)**

| **rpm** | **LiOH-H₂O (98.5%)** | **H₂O₂ (34.5%)** | **D=80cm, T=10cm** | **H₂O₂ injection method and reaction time** | **Li₂O₂** | **Li₂O** | **Li₂O₂ purity** | **Rem arks** |
|---|---|---|---|---|---|---|---|---|
| | **[kg]** | **[kg]** | **T.Vel. [m/sec]** | **min** | **D50 [um]** | **D50 [um]** | **[wt%]** | |
| 150 | 3 | 3.4 | 0.785 | Quantitative injection (15 min) + 60 min reaction | 50 | 35 | 98.6 | a |
| 500 | 3 | 3.4 | 2.618 | Quantitative injection (15 min) + 60 min reaction | 30 | 21 | 97.5 | b |
| 750 | 3 | 3.4 | 3.927 | Quantitative injection (15 min) + 60 min reaction | 20 | 14 | 98.3 | c |
| 750 | 5.2 | 6 | 3.927 | Quantitative injection (40 min) + 60 min reaction | 25 | 17.5 | 98.4 | d |
| 750 | 5.2 | 6 | 3.927 | Quantitative injection after putting 2 kg (15 min) + 60 min | 20 | 14 | 98.3 | e |
| | | | | reaction | | | | |

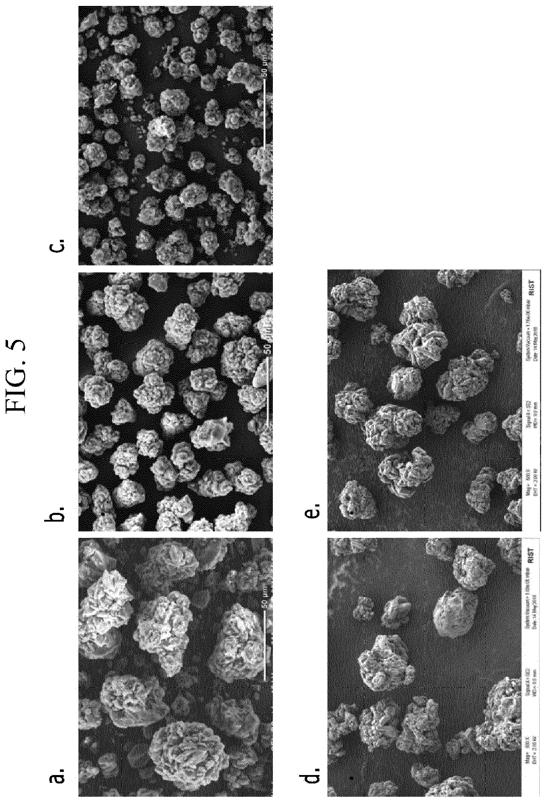

FIG. 5 is an SEM photograph showing the particles according to Experiment 4.

As a result of using the co-precipitation reactor, sphericity of particles was increased.

In addition, the higher rpm, the smaller D50 of secondary particles.

### (Comparison of a, b, and c)

When H₂O₂ was quantitatively slowly added, the particles became larger.

### (Comparison of d with e)

A reaction rate and rpm may be adjusted to control a particle size.

### 5. Preparation of Lithium Oxide

Li₂O₂ synthesized in Experiment 4 was converted into Li₂O through a heat treatment at 420 °C for 3 hours under a nitrogen atmosphere. Converted components are shown in Table 8.

**(Table 8)**

| **rpm** | **LiOH-H₂O (98.5%)** | **H₂O₂ (34.5%)** | **D = 80 cm, T = 10 cm** | **H₂O₂ injection method and reaction time** | **Li₂O₂** | **Li₂O₂ purity** | **Li₂O** | **Li₂O purity** | **Re ma rks** |
|---|---|---|---|---|---|---|---|---|---|
| | **[kg]** | **[kg]** | **T.Vel. [m/sec]** | **min** | **D50 [um]** | **[wt%]** | **D50 [um]** | **[wt%]** | |
| 150 | 3 | 3.4 | 0.785 | Quantitative | 50 | 98.6 | 35 | 97.9% | a |
| | | | | injection (15 min) + 60 min reaction | | | | | |
| 500 | 3 | 3.4 | 2.618 | Quantitative injection (15 min) + 60 min reaction | 30 | 97.5 | 21 | 96.2% | b |
| 750 | 3 | 3.4 | 3.927 | Quantitative injection (15 min) + 60 min reaction | 20 | 98.3 | 14 | 97.4% | c |
| 750 | 5.2 | 6 | 3.927 | Quantitative injection (40 min) + 60 min reaction | 25 | 98.4 | 17.5 | 97.6% | d |
| 750 | 5.2 | 6 | 3.927 | Quantitative injection after putting 2 kg (15 min) + 60 min reaction | 20 | 98.3 | 14 | 97.4% | e |

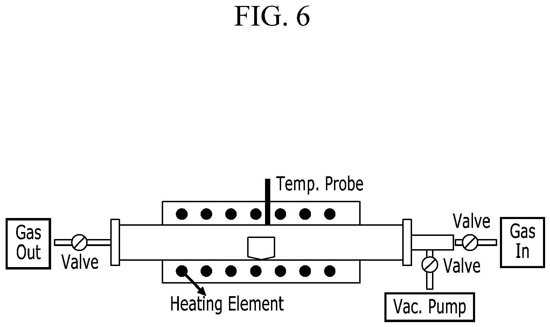

The results show that particle size and shape were affected by Li₂O₂. Additionally, a furnace as shown in FIG. 6 was manufactured and used for the heat treatment.

10 g of Li₂O₂ was charged inside, and after removing the internal air with a vacuum pump for 30 minutes, the heat treatment was started while flowing N₂. When the heat treatment was completed, powder was discharged and cooled down under a nitrogen atmosphere to be recovered.

During the heat treatment, a flow rate of the nitrogen varied from 1 L to 5 L per minute, but there was no difference depending on the flow rate.

Table 9 shows the heat treatment results.

**(Table 9)**

| **Temp (°C)** | **Time (min.)** | **Li₂O₂ [wt%]** | **Li₂O [wt%]** | **LiOH [wt%]** | **LiOH-H₂O [wt%]** | **Li₂CO₃ [wt%]** |
|---|---|---|---|---|---|---|
| 350 | 30 | 97.3 | 2.2 | 0 | 0.5 | 0 |
| 350 | 60 | 93.8 | 6.1 | 0 | 0.2 | 0 |
| 350 | 90 | 84.6 | 15.1 | 0 | 0.3 | 0 |
| 350 | 120 | 79.6 | 20 | 0 | 0.4 | 0 |
| 400 | 30 | 31.9 | 67.4 | 0 | 0.5 | 0.2 |
| 400 | 60 | 0.1 | 99.4 | 0 | 0.3 | 0.2 |
| 400 | 90 | 0.2 | 99 | 0 | 0.5 | 0.3 |
| 400 | 120 | 0 | 99.7 | 0 | 0.3 | 0 |
| 450 | 30 | 0 | 99.6 | 0 | 0.4 | 0 |
| 450 | 60 | 0 | 99.6 | 0 | 0.4 | 0 |
| 450 | 90 | 0 | 99.7 | 0 | 0.3 | 0 |
| 450 | 120 | 0 | 99.8 | 0 | 0.2 | 0 |
| 500 | 30 | 0 | 99.6 | 0 | 0.4 | 0 |
| 500 | 60 | 0 | 99.7 | 0 | 0.3 | 0 |
| 500 | 90 | 0 | 99.8 | 0 | 0.2 | 0 |
| 500 | 120 | 0 | 99.8 | 0 | 0.2 | 0 |
| 600 | 30 | 0 | 99.5 | 0 | 0 | 0.5 |
| 600 | 60 | 0 | 99.6 | 0 | 0.4 | 0 |
| 600 | 90 | 0 | 99.2 | 0 | 0.8 | 0 |

As shown in Table 9, Li₂O₂ was completely converted into Li₂O, when heat-treated at 400 °C or higher for 60 minutes or more.

### 6. LNO Synthesis and Cell Data Analysis

20 g of NiO and 8.85 g of Li₂O were mixed for 5 minutes with a small mixer. Herein, the used Li₂O was a sample c of Table 8.

The mixed powder was exposed to 700 °C for 12 hours in a nitrogen atmosphere furnace to synthesize Li₂NiO₂. The synthesized powder was 28.86 g.

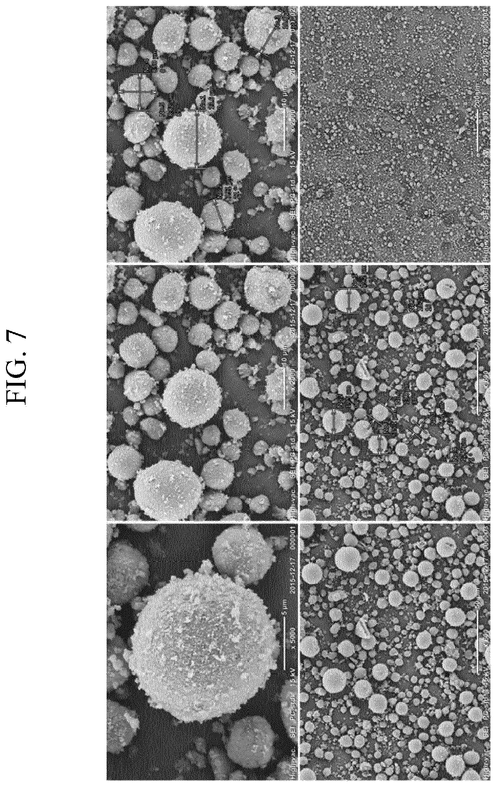

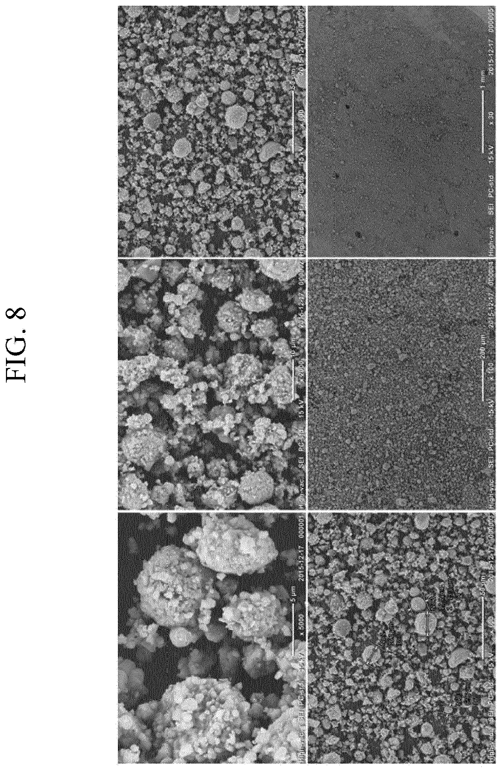

FIG. 7 is a SEM photograph after the mixing, and FIG. 8 is a SEM photograph of synthesized LNO after the sintering.

The synthesized Li₂NiO₂ was used to manufacture a CR2032 coin cell, and electrochemical characteristics thereof were evaluated. An electrode was manufactured by coating an active material layer to be 50 to 80 µm thick on a 14 mm-thick aluminum thin plate.

Electrode slurry was prepared by mixing Li₂NiO₂ : denka black (D.B.) : PvdF = 85:10:5 wt% and then, coated, vacuum-dried, and pressed to form a coating layer having a final thickness of 40 to 60 µm. An electrolyte solution was an organic solution prepared by using a mixed solvent of EC:EMC = 1:2 and dissolving LiPF₆ salt at a concentration of 1 M.

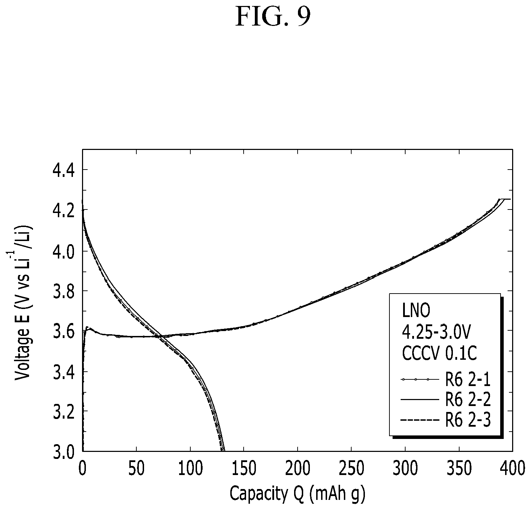

The manufactured coin cell was charged and discharged at a 0.1 C-rate, in a CCCV mode under a 1% condition within a range of 4.25 V to 3.0 V. Charge and discharge curves of three coin cells are shown in FIG. 9 and Table 10.

**(Table 10)**

| **CR2032 coin cell** | **Charge capacity** | **Discharge capacity** | **Irreversible capacity** | **Reversible efficiency** |
|---|---|---|---|---|
| **Characteristic evaluation result** | **[mAh/g]** | **[mAh/g]** | **[mAh/g]** | **[%]** |
| 1 | 391.72 | 131.07 | 260.65 | 33.46 |
| 2 | 391.12 | 132.33 | 258.79 | 33.83 |
| 3 | 386.81 | 129.59 | 257.22 | 33.51 |
| **average** | **389.88** | **130.99** | **258.88** | **33.6** |

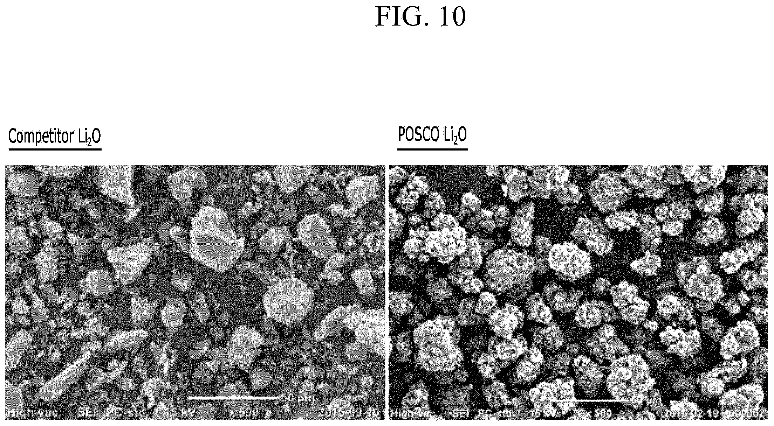

FIG. 10 is a SEM photograph (left) showing commercially available Li₂O and a SEM photograph showing Li₂O according to the present example.

The particles according to the examples were clearly distinguished as secondary particles.

Tables 11, 12, and 13 are evaluation data of LNO's resultants obtained by firing two Li₂O particles of FIG. 10 as described above.

LNO's according to the examples exhibited improved characteristics in all aspects.

**(Table 11)**

| **Particle size analysis result** | **Dmin [um]** | **D50 [um]** | **Dmax [um]** |
|---|---|---|---|
| Comparative material | 4.47 | 13.23 | 39.23 |
| Developed product | 5.12 | 17.33 | 77.33 |
| Incremental (developed product-comparative material) | 0.65 | 4.1 | 0.65 |
| Increase rate (incremental/comparative material) | 14.50% | 31.00% | 97.10% |

**(Table 12)**

| **XRD phase analysis result** | **LNO (%)** | **NiO (%)** | **Li₂O (wt%)** | **Sum** |
|---|---|---|---|---|
| Comparative material | 90.90% | 7.60% | 1.50% | 100% |
| Developed product | 94.50% | 4.90% | 0.60% | 100% |
| Incremental (developed product-comparative material) | 3.60% | -2.70% | -0.90% | 0.00% |
| Increase rate (incremental/comparative material) | 3.90% | - 35.80% | -57.00% | 0.00% |

**(Table 13)**

| **Residual lithium analysis** | **LiOH [wt%]** | **Li₂CO₃ [wt%]** |
|---|---|---|
| Comparative material | 4.19 | 0.36 |
| Developed product | 1.75 | 0.47 |
| Incremental (developed product-comparative material) | -2.44 | 0.11 |
| Increase rate (incremental/comparative material) | -58.20% | 30.60% |

Table 14 shows the evaluation results of coin cells using LNO's obtained after the firing two Li₂O's of FIG. 10 as described above.

The cell data of the examples were significantly improved.

**(Table 14)**

| **CR2032 coin cell** | **Charge capacity** | **Discharge capacity** | **Irreversible capacity** | **Reversible efficiency** |
|---|---|---|---|---|
| **Characteristic evaluation result** | **[mAh/g]** | **[mAh/g]** | **[mAh/g]** | **[%]** |
| Developed product | 414.4 | 144.5 | 269.9 | 34.90% |
| Comparative material | 403.6 | 139.5 | 264.1 | 34.60% |
| Incremental (developed product-comparative material) | 10.8 | 5 | 5.8 | 0.30% |
| Increase rate (incremental/comparative material) | 2.70% | 3.60% | 2.20% | 0.90% |

The present invention may be embodied in many different forms, and should not be construed as being limited to the disclosed embodiments. In addition, it will be understood by those skilled in the art that various changes in form and details may be made thereto without departing from the technical spirit and essential features of the present invention. Therefore, the aforementioned embodiments should be understood to be exemplary but not limiting the present invention in any way.

## Claims

1. A lithium compound, comprising
Li₂O primary particles having an average particle diameter (D50) of less than or equal to 5 µm; and
secondary particles composed of the primary particles.

2. The lithium compound of claim 1, wherein the secondary particle has a spherical shape.

3. The lithium compound of claim 1, wherein the average particle diameter (D50) of the secondary particles is 10 to 100 µm.

4. The lithium compound of claim 3, wherein the average particle diameter (D50) of the secondary particles is 10 to 30 µm.

5. A nickel-based cathode active material derived from a lithium compound including primary Li₂O particles having an average particle diameter (D50) of less than or equal to 5 µm and secondary particles composed of the primary particles; and a nickel raw material.

6. The nickel-based cathode active material of claim 5, wherein the cathode active material is Li₂NiO₂, and Dmin is greater than or equal to 5 µm.

7. The nickel-based cathode active material of claim 6, wherein the cathode active material comprises a residual lithium compound of less than or equal to 2.5 wt% based on 100 wt% of the total weight.

8. A method for preparing lithium oxide, comprising
reacting hydrogen peroxide (H₂O₂) and lithium hydroxide (LiOH) to obtain over-lithiated oxide (Li₂O₂); and
heat-treating the over-lithiated oxide to obtain lithium oxide (Li₂O), wherein in the reacting of the hydrogen peroxide (H₂O₂) and lithium hydroxide (LiOH) to obtain a over-lithiated oxide (Li₂O₂),
a mole ratio (Li/H₂O₂) of lithium of lithium hydroxide to hydrogen peroxide is 1.9 to 2.4.

9. The method of claim 8, wherein
in the reacting of the hydrogen peroxide (H₂O₂) and lithium hydroxide (LiOH) to obtain a over-lithiated oxide (Li₂O₂),
the reaction temperature is 40 to 60 °C.

10. The method of claim 8, wherein
in the reacting of hydrogen peroxide (H₂O₂) and lithium hydroxide (LiOH) to obtain over-lithiated oxide (Li₂O₂),
the reaction of hydrogen peroxide (H₂O₂) and lithium hydroxide (LiOH) is accompanied by stirring at 500 rpm or more.

11. The method of claim 8, wherein
the heat-treating of the over-lithiated oxide to obtain lithium oxide (Li₂O) is performed at 400 to 600 °C in an inert atmosphere.

12. A method for preparing a nickel-based cathode active material, comprising
reacting hydrogen peroxide (H₂O₂) and lithium hydroxide (LiOH) to obtain over-lithiated oxide (Li₂O₂);
heat-treating the over-lithiated oxide to obtain lithium oxide (Li₂O); and firing the lithium oxide and nickel raw material to obtain a nickel-based cathode active material;
wherein in the reacting of the hydrogen peroxide (H₂O₂) and lithium hydroxide (LiOH) to obtain a over-lithiated oxide (Li₂O₂),
a mole ratio (Li/H₂O₂) of lithium of lithium hydroxide to hydrogen peroxide is 1.9 to 2.4.

13. A secondary battery, comprising
a cathode including a nickel-based cathode active material derived from a lithium compound including primary Li₂O particles having an average particle diameter (D50) of less than or equal to 5 µm and secondary particles composed of the primary particles;
an anode including a anode active material; and
an electrolyte between the cathode and the anode.
